# EUROPEAN PATENT APPLICATION

(11) **EP 2 312 838 A1**
(43) Date of publication of application: **20.04.2011**
(21) Application number: 10175560.1
(22) Date of filing: 07.09.2010
(51) Int. Cl.: H04N 5/76, H04N 5/91

(54) **Broadcast reception apparatus and broadcast reception method**

(30) Priority: 30.09.2009 JP 2009228127
(71) Applicant: Kabushiki Kaisha Toshiba, Tokyo 105-8001 (JP)
(72) Inventor: Kuwahara, Kazuki, Tokyo 105-8001 (JP); Miyazawa, Akira, Tokyo 105-8001 (JP); Kimura, Takahiro, Tokyo 105-8001 (JP)
(74) Representative: HOFFMANN EITLE

(57) **Abstract**

According to one embodiment, a broadcast reception apparatus includes a recording controller (110) and a playback controller (110). The recording controller is configured to control recording of programs corresponding to at least one channel signal in a recording time zone which is set. The playback controller is configured to control starting of playback from a beginning of a program which is being recorded or from a recording start position of the program which is being recorded, on the basis of an input timing of a playback instruction which is input while programs corresponding to a predetermined channel signal are being recorded by the control of the recording controller.

## Description

Embodiments described herein relate generally to a broadcast reception apparatus and a broadcast reception method, which receive a broadcast signal and output, e.g. video of a program of a designated channel on the basis of the received broadcast signal.

In recent years, television broadcast reception apparatuses, which can receive digital television broadcast signals and can record and play back programs based on the received digital television broadcast signals, have been gaining in popularity. For example, the television broadcast reception apparatus can record a program based on a digital television broadcast signal by using an HDD or a DVD. In addition, the television broadcast reception apparatus can acquire service information from the digital television broadcast signal, and can control the display of a program list on the basis of the service information.

Furthermore, in recent years, television broadcast reception apparatuses having tuners have come on to the market. Jpn. Pat. Apple. KOKAI Publication No. 2009-124379 discloses a multi-channel reception apparatus as an example of this type of television broadcast reception apparatus. The multi-channel reception apparatus, for example, can record and play back programs corresponding to plural channels, which are received by the plural tuners.

The storage capacity of an information storage medium, such as an HDD, has been increasing year by year. The television broadcast reception apparatus having plural tuners, as described above, records programs corresponding to plural channels, which are received by the plural tuners, one after another in the large-capacity HDD. It is thus expected that many programs are stored in the large-capacity HDD. When programs are played back, the user finds a target program from among many programs stored in the large-capacity HDD, and performs an operation for playing back the target program that has been found.

However, it is time-consuming for the user to find a target program, as described above. In order to maze the user free from such a time-consuming work, there is a demand for a technique for playing back a program, which tends to become an object of playback, by a simple operation.

A general architecture that implements the various features of the embodiments will now be described with reference to the drawings. The drawings and the associated descriptions are provided to illustrate the embodiments and not to limit the scope of the invention.
FIG. 1 schematically shows an example of the structure of a digital television broadcast reception apparatus according to one embodiment;
FIG. 2 shows an example of multi-simul-recording by the digital television broadcast reception apparatus, illustrating a first example of simple playback of multi-simul-recording;
FIG. 3 shows an example of multi-simul-recording by the digital television broadcast reception apparatus, illustrating a second example of simple playback of multi-simul-recording;
FIG. 4 shows an example of multi-simul-recording by the digital television broadcast reception apparatus, illustrating a third example of simple playback of multi-simul-recording;
FIG. 5 shows an example of multi-simul-recording by the digital television broadcast reception apparatus, illustrating a fourth example of simple playback of multi-simul-recording;
FIG. 6 shows an example of multi-simul-recording by the digital television broadcast reception apparatus, illustrating a fifth example of simple playback of multi-simul-recording; and
FIG. 7 shows an example of a screen displaying a playback start point.

Various embodiments will be described hereinafter with reference to the accompanying drawings.

In general, according to one embodiment, a broadcast reception apparatus includes a recording controller and a playback controller. The recording controller is configured to control recording of programs corresponding to at least one channel signal in a recording time zone which is set. The playback controller is configured to control starting of playback from a beginning of a program which is being recorded or from a recording start position of the program which is being recorded, on the basis of an input timing of a playback instruction which is input while programs corresponding to a predetermined channel signal are being recorded by the control of the recording controller.

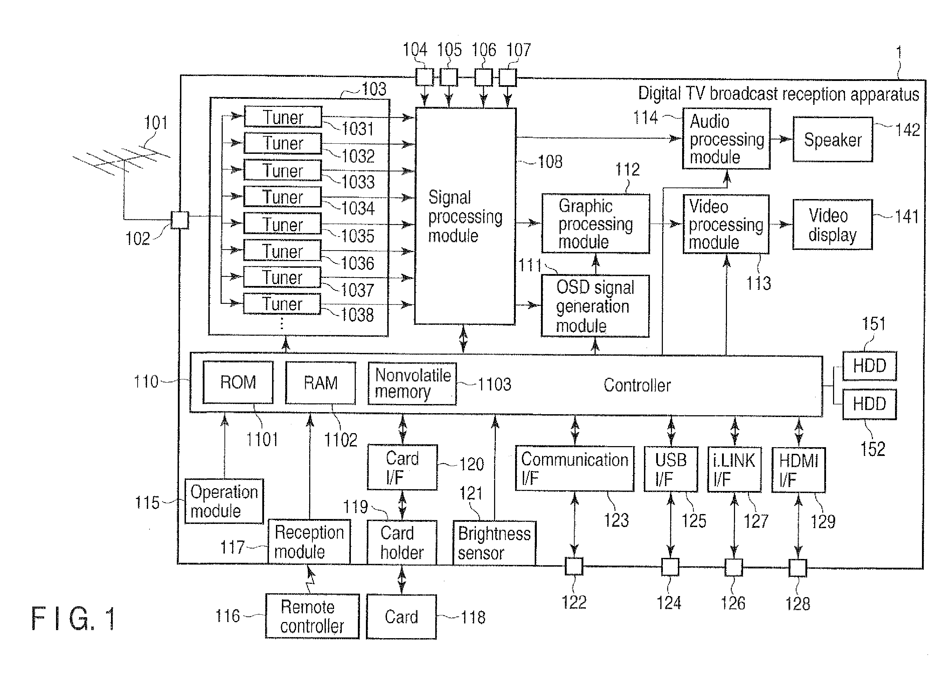

FIG. 1 schematically shows the structure of a digital television broadcast reception apparatus according to one embodiment. As shown in FIG. 1, the digital television broadcast reception apparatus 1 comprises an antenna 101, an input terminal 102, a tuner module 103, external input terminals 104 to 107, a signal processing module 108, a controller 110, an OSD signal generation module 111, a graphics processing module 112, a video processing module 113, an audio processing module 114, an operation module 115, a reception module 117, a card holder 119, a card interface 120, a brightness sensor 121, a LAN terminal 122, a communication interface 123, a USB terminal 124, a USB interface 125, an i.LINK terminal 126, an i.LINK interface 127, an HDMI terminal 128, an HDMI interface 129, a video display 141, a speaker 142, and HDDs 151 and 152.

Further, the tuner module 103 includes ground digital television broadcast tuners 1031. to 1038, and also includes a BS/CS digital television broadcast tuner. By the ground digital television broadcast tuners 1031 to 1038, a program guide of ground digital television broadcast, which corresponds to ground digital television broadcast, can be received and displayed. In addition, by the BS/CS digital television broadcast tuner, a program guide, which corresponds to BS/CS digital television broadcast, can be received and displayed.

In the present embodiment, as shown in FIG. 1, a description is given of the case in which the digital television broadcast reception apparatus 1 includes the video display 141 and speaker 142. However, the digital television broadcast reception apparatus 1 is not limited to this structure. For example, the digital television broadcast reception apparatus 1 may not include the video display 141 and speaker 142. In other words, the digital television broadcast reception apparatus 1 may be configured to be connected to the video display 141 and speaker 142 via connection means such as an HDMI.

In addition, in the present embodiment, as shown in FIG. 1, a description is given of the case in which the digital television broadcast reception apparatus 1 includes the HDDs 151 and 152. However, the digital television broadcast reception apparatus 1 is not limited to this structure. For example, the digital television broadcast reception apparatus 1 may not include the HDDs 151 and 152. In other words, the digital television broadcast reception apparatus 1 may be configured to be connected to an external storage device (e.g. HDD) via connection means such as a USB terminal and a USB interface.

Besides, in the present embodiment, as shown in FIG. 1, a description is given of the case in which the digital television broadcast reception apparatus 1 includes tuners. However, the digital television broadcast reception apparatus 1 is not limited to this structure. For example, the digital television broadcast reception apparatus 1 may not include the plural tuners. In this case, for example, the digital television broadcast reception apparatus 1 may be configured to receive IP (Internet Protocol) broadcast via the LAN terminal 122, and to playback or record programs corresponding to the plural channels of the IP broadcast.

Next, the details of the digital television broadcast reception apparatus 1 are described.

Ground digital television broadcast signals, which are received by the antenna 101 for receiving ground digital television broadcast, are supplied to the tuners 1031 to 1038 via the input terminal 102, and digital television broadcast signals of desired channels are selected by ground digital television broadcast signal processing modules of the tuners 1031 to 1038. The plural digital television broadcast signals, which have been selected by the tuners 1031 to 1038, are supplied to OFDM (orthogonal frequency division multiplexing) demodulation modules and are demodulated to digital video signals and audio signals. The demodulated digital video signals and audio signals are output to the signal processing module 108.

The signal processing module 108 selectively applies a predetermined digital signal process to the digital video signals and audio signals which are supplied from the OFDM demodulation modules, and outputs the processed signals to the graphics processing module 112 and audio processing module 114.

For example, four input terminal 104 to 107 are connected to the signal processing module 108. The input terminals 104 to 107 enable analog video signals and audio signals to be input from the outside of the digital television broadcast reception apparatus 1.

The signal processing module 108 selectively digitizes analog video signals and audio signals, which are supplied from the input terminals 104 to 107, performs a predetermined digital signal process on the digitized video signal and audio signal, and then outputs the resultant processed signals to the graphic processing module 112 and audio processing module 114.

The graphic processing module 112 has a function of superimposing an OSD (on-screen display) signal, which is generated by the OSD signal generation module 111, on the digital video signal which is supplied from the signal processing module 108, and outputting the resultant signal. The graphic processing module 112 can selectively output one of the output video signal of the signal processing module 108 and the output OSD signal of the OSD signal generation module 111, and can output both output signals in such a combination that both output signals constitute the halves of a screen.

The digital video signal, which is output from the graphic processing module 112, is supplied to the video processing module 113. The video signal which has been processed by the video processing module 113 is supplied to the video display 141. The video display 141 displays video based on the video signal.

The audio processing module 114 converts the input digital audio signal to an analog audio signal of a format which can be reproduced by the speaker 142. The analog audio signal is output to the speaker 142 and is reproduced.

All the operations of the digital television broadcast reception apparatus 1, including the above-described various receiving operations, are comprehensively controlled by the controller 110. The controller 110 includes a CPU (central processing unit), etc., receives operation information (various instructions) from the operation module 115 or operation information (various instructions) that is sent from a remote controller 116 and received by the reception module 117, and controls the respective modules so that the operation content of the operation information may be reflected.

The controller 110 includes a ROM (read-only memory) 1101 which stores a control program that is executed by the CPU, a RAM (random access memory) 1102 which provides a working area for the CPU, and a nonvolatile memory 1103 which stores various setting information and control information.

The controller 110 is connected via the card interface 120 to the card holder 119 in which a memory card 118 can be loaded. Thereby, the controller 110 can execute information transmission via the card interface 120 to/from the memory card 118 that is loaded in the card holder 119.

In addition, the controller 110 is connected to the LAN terminal 122 via the communication interface 123. Thereby, the controller 110 can execute information transmission via the communication interface 123 to/from a LAN-capable device which is connected to the LAN terminal 122. In this case, the controller 110 has a DHCP (dynamic host configuration protocol) server function, allocates an IP (Internet protocol) address to the LAN-capable device connected to the LAN terminal 122, and controls the LAN-capable device.

The controller 110 is connected to the HDMI terminal 128 via the HDMI interface 129. Thereby, the controller 110 can execute information transmission via the HDMI interface 129 to/from an HDMI-capable device which is connected to the HDMI terminal 128.

The controller 110 is connected to the USB terminal 124 via the USB interface 125. Thereby, the controller 110 can execute information transmission via the USB interface 125 to/from a USB-capable device which is connected to the USB terminal 124.

The controller 110 is connected to the i.LINK terminal 126 via the i.LINK interface 127. Thereby, the controller 110 can execute information transmission via the i.LINK interface 127 to/from an i-LINK-capable device which is connected to the i.LINK terminal 126.

The controller 110 is configured to receive a brightness detection signal from the brightness sensor 121. Thereby, the controller 110 can control the brightness of video and backlight, etc., on the basis of the brightness detection signal.

Furthermore, the controller 110 can control a recording operation for recording a broadcast signal, which has been selected by the tuner module 103 and descrambled, in the HDD 151, 152, or in the external storage device (e.g. HDD) which is connected via the LAN terminal 122 or USB terminal 124. As described above, since the tuner module 103 includes the plural tuners, programs of plural channels can be recorded at the same time, or programs of plural channels can be displayed at the same time. For example, the digital television broadcast reception apparatus 1 can record all programs of plural channels (designated plural channels) in a week (e.g. in a designated time zone in a week) with the image quality of a High Vision level. This recording is referred to as "multi-simul-recording". In order to realize the multi-simul-recording, the digital television broadcast reception apparatus 1 includes the plural tuners 1031 to 1038 corresponding to plural channels. In addition, in order to be adaptive to scramble broadcast, the digital television broadcast reception apparatus 1 includes card slots for insertion of plural cards for descrambling, which correspond to the plural tuners 1031 to 1038.

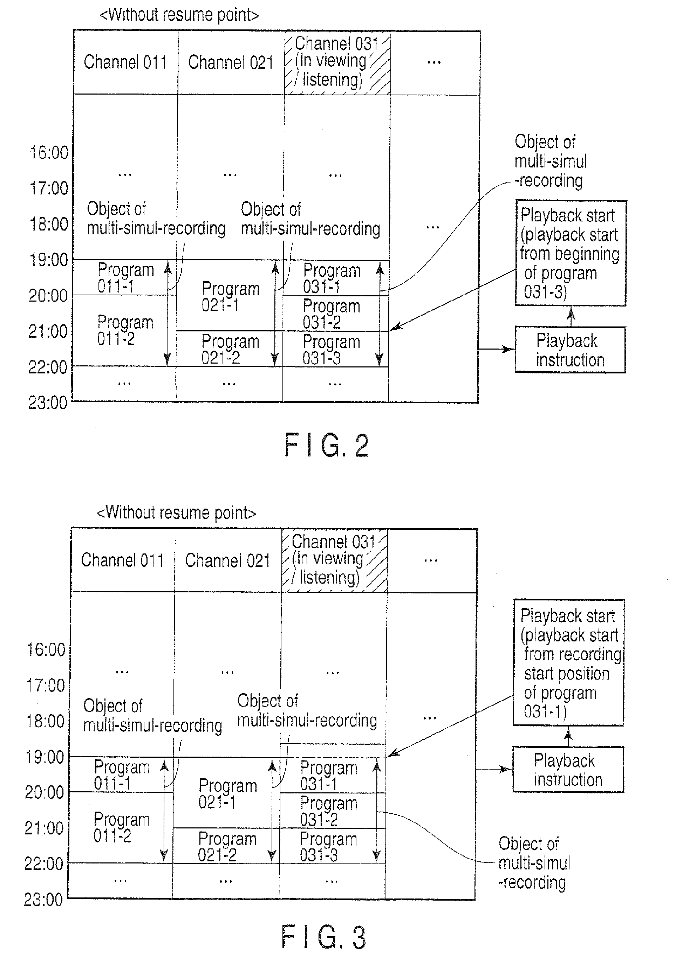

Next, referring to FIG. 2 through FIG. 6, a description is given of predetermined multi-simial-recording by the digital television broadcast reception apparatus. For example, in the case where the nonvolatile memory 1103 of the digital television broadcast reception apparatus stores predetermined multi-simul-recording setting information which is set by the user, the controller 110 controls predetermined multi-simul-recording on the basis of the predetermined multi-simul-reccrding setting information.

For example, it is assumed that the predetermined multi-simul-recording setting information includes first recording information indicating that recording of channel 011 is performed from 19:00 to 22:00, second recording information indicating that recording of channel 021 is performed from 19:00 to 22:00, and third recording information indicating that recording of channel 031 is performed from 19:00 to 22:00. As shown in FIG. 2, FIG. 3, FIG. 5 and FIG. 6, the controller 110 controls the selection of the signal of channel 011 during 19:00-22:00 on the basis of the first recording information, controls the selection of the signal of channel 021 during 19:00-22:00 on the basis of the second recording information, and controls the selection of the signal of channel 031 during 19:00-22:00 on the basis of the third recording information. On the basis of the signal select control of the controller 110, the tuner 1031 selects, from the broadcast signals, the signal of channel 011 during 19:00-22:00 and inputs the signal of channel 011 to the signal processing module 108, the tuner 1032 selects, from the broadcast signal, the signal of channel 021 during 19:00-22:00 and inputs the signal of channel 021 to the signal processing module 108 and the tuner 1033 selects, from the broadcast signals, the signal of channel 031 during 19:00-22:00 and inputs the signal of channel 031 to the signal processing module 108.

The signal processing module 108 descrambles the signal of channel 011, the signal of channel 021 and the signal of channel 031. The controller 110 executes control to record in the HDD 151 the program data corresponding to the descrambled signal of channel 011, the descrambled signal of channel 021 and the descrambled signal of channel 031.

For example, as shown in FIG. 2, FIG. 5 and FIG. 6, in the case where a program 011-1 of channel 011 is broadcast during 19:00-20:00 and a program 011-2 of channel 011 is broadcast during 20:00-22:00, the HDD 151 records the entirety of the program 011-1 and the entirety of the program 011-2. In the case where a program 021-1 of channel 021 is broadcast during 19:00-21:00 and a program 021-2 of channel 021 is broadcast during 21:00-22:00, the HDD 151 records the entirety of the program 021-1 and the entirety of the program 021-2. In the case where a program 031-1 of channel 031 is broadcast during 19:00-20:00, a program 031-2 of channel 031 is broadcast during 20:00-21:00 and a program 031-3 of channel 031 is broadcast during 21:00-22:00, the HDD 151 records the entirety of the program 031-1, the entirety of the program 031-2 and the entirety of the program 031-3. In other words, the HDD 151 continues to record the programs corresponding to the signal of channel 011 during 19:00-22:00, continues to record the programs corresponding to the signal of channel 021 during 19:00-22:00, and continues to record the programs corresponding to the signal of channel 031 during 19:00-22:00. In the case where the single HDD 151 is not capable of carrying out the simultaneous recording of the three channels, it is possible that the HDD 151 executes simultaneous recording of two channels, and the HDD 152 executes simultaneous recording of the other channel.

As shown in FIG. 3, in the case where a program 011-1 of channel 011 is broadcast during 19:00-20:00 and a program 011-2 of channel 011 is broadcast during 20:00-22:00, the HDD 151 records the entirety of the program 011-1 and the entirety of the program 011-2. In the case where a program 021-1 of channel 021 is broadcast during 19:00-21:00 and a program 021-2 of channel 021 is broadcast during 21:00-22:00, the HDD 151 records the entirety of the program 021-1 and the entirety of the program 021-2. In the case where a program 031-1 of channel 031 is broadcast during 18:30-20:00, a program 031-2 of channel 031 is broadcast during 20:00-21:00 and a program 031-3 of channel 031 is broadcast during 21:00-22:00, the HDD 151 records a part of the program 031-1 (the part corresponding to 19:00-20:00 of the program 031-1), the entirety of the program 031-2 and the entirety of the program 031-3.

On the basis of the above-described predetermined multi-simul-recording setting, the controller 110 executes control to record the programs corresponding to the channel signal of channel 011, the programs corresponding to the channel signal of channel 021 and the programs corresponding to the channel signal of channel 031, during 19:00-22:00 of every day (or Monday to Friday, or Monday to Saturday).

In addition, the controller 110 deletes, for example, a recorded program after one week from the date/time of recording thereof, from among the recorded programs which are recorded by the multi-simul-recording. Alternatively, for example, in the case where the residual capacity of the HDD 151 has decreased to a predetermined capacity or less, the controller 110 deletes the recorded programs, which are recorded by the multi-simul-recording, successively from the earliest recorded one.

Next, referring to FIG. 2, a first example of simple playback of multi-simul-recording is described. For example, the controller 110 controls the selection of the signal of channel 031 on the basis of a viewing/listening instruction (select operation) of channel 031 which is input via the remote controller 116 or the like. Accordingly, the tuner 1038 selects, from the broadcast signals, the signal of channel 031 and inputs the selected signal to the signal processing module 108. In the meantime, as described above, since the tuner 1033 selects the signal of channel 031 in order to perform multi-simul-recording, the tuner 1033 may also select the signal of channel 031 from the broadcast signals in this case. The signal processing module 108 descrambles the signal of channel 031, outputs the video signal of the program corresponding to the signal of channel 031 to the video display 141 via the graphic module 112 and video processing module 113, and outputs the audio signal of the program corresponding to the signal of channel 031 to the speaker 142 via the audio processing module 114. Thereby, the video display 141 displays the video of the program corresponding to the signal of channel 031, and the speaker 142 outputs the audio of the program corresponding to the signal of channel 031.

Presupposing that the predetermined multi-simul-recording is being executed on the basis of the above-described predetermined multi-simul-recording setting information and that the reproduction (viewing/listening) of the channel 031 is being executed, the controller 110 executes control to start playback from the beginning of the program (recorded program 031.-3 of 12/31), which is currently being recorded and belongs to the channel (channel. 031) which is currently being viewed, from among the plural recorded programs that are recorded by the predetermined multi-simul-recording (e.g. recorded programs 011-1, 011-2, 021-1, 021-2, 031-1, 031-2 and 031-3) of one week (12/25 to 12/31)), on the basis of a forward skip instruction (hereafter referred to as "playback instruction"; e.g. a playback instruction which is input at 21:30 of 12/31) which is input via the remote controller 116 or the like. In this case, since the recorded program 031-3 is recorded from the beginning, playback is started from the beginning of the recorded program 031-3.

Next, referring to FIG. 3, a second example of simple playback of multi-simul-recording is described. For example, as shown in FIG. 3, in the case where the recorded program 031-1 is recorded from an intermediate point and the playback instruction is input at 19:30 of 12/31 via the remote controller 116 or the like, the controller 110 executes control to start playback from a record start position (position at 19:00) of the program (recorded program 031-1 of 12/31), which is currently being recorded and belongs to the channel (channel 031) which is currently being viewed, from among the plural recorded programs that are recorded by the predetermined multi-simul-recording (e.g. recorded programs 011-1, 011-2, 021-1, 021-2, 031-1, 031-2 and 031-3) of one week (12/25 to 12/31)). In this case, since the recorded program 031-1 is not recorded from the beginning, the playback of the recorded program 031-1 is started from the playback-enabling point (recording start position).

The above description has been given of the simple playback in the multi-simul-recording of the three channels. Specifically, the multi-simul-recording described in this embodiment includes not only the simultaneous recording of plural channels, but also recording of one channel. In other words, the multi-simul-recarding means simultaneous recording of one or more channels.

For example, it is assumed that the predetermined multi-simul-recording setting information includes only the third recording information indicating that the recording of channel 031 is performed from 19:00 to 22:00. Specifically, the HDD 151 records the entirety of the program 031-1, the entirety of the program 031-2 and the entirety of the program 031-3, or the HDD 151 records a part of the program 031-1 (the part corresponding to 19:00-20:00), the entirety of the program 031-2 and the entirety of the program 031-3.

In the case where the reproduction (viewing/listening) of channel 031 is being executed or the reproduction of a channel other than channel 031 is being executed, the controller 110 executes control to start playback from the beginning of the program (recorded program 031-3 of 12/31) which is being currently recorded, on the basis of a playback instruction (e.g. a playback instruction which is input at 21:30 of 12/31) which is input via the remote controller 116 or the like. In another case, the controller 110 executes control to start playback from the recording start position (the position of 19:00) of the program (recorded program 031-1 of 12/31) which is being currently recorded, on the basis of a playback instruction (e.g. a playback instruction which is input at 19:30 of 12/31) which is input via the remote controller 116 or the like.

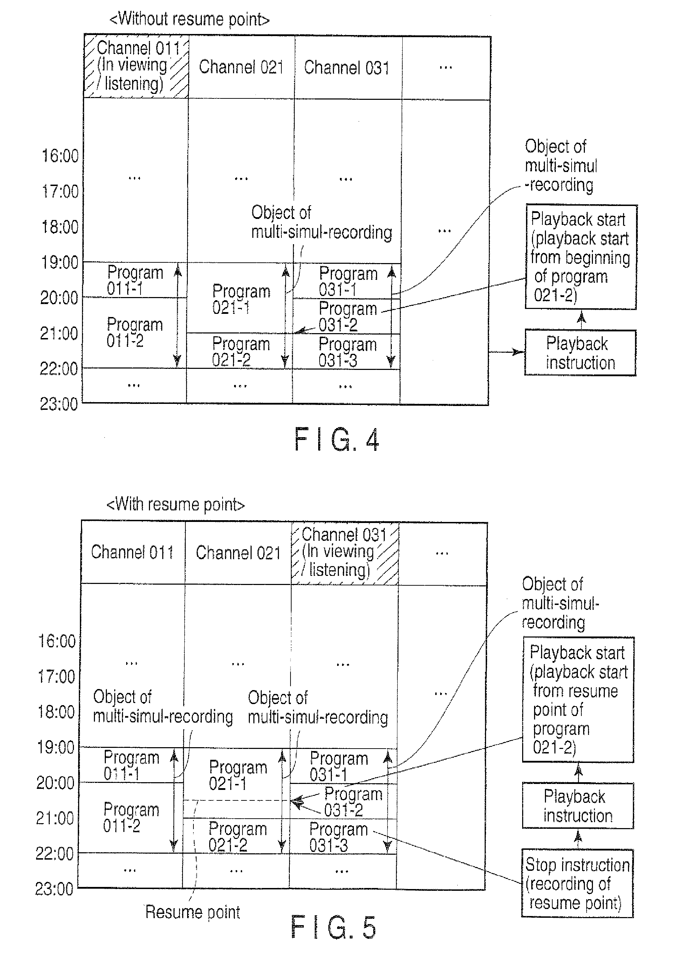

Next, referring to FIG. 4, a third example of simple playback of multi-simul-recording is described. For example, it is assumed that the predetermined multi-simul-recording setting information includes the second recording information indicating that recording of channel 021 is performed from 19:00 to 22:00, and the third recording information indicating that recording of channel 031 is performed from 19:00 to 22:00. As shown in FIG. 4, the controller 110 controls the selection of the signal of channel 021 during 19:00-22:00 on the basis of the second recording information, and controls the selection of the signal of channel 031 during 19:00-22:00 on the basis of the third recording information. On the basis of the above-described predetermined multi-simul-recording setting, the controller 110 executes control to record the programs corresponding to the channel signal of channel 021 and the programs corresponding to the channel signal of channel 031, during 19:00-22:00 of every day (or Monday to Friday, or Monday to Saturday).

Presupposing that the above-described predetermined multi-simul-recording is being executed and that the reproduction (viewing/listening) of the channel 011 is being executed, the controller 110 executes control to start playback from the beginning of the program (recorded program 021-2 of 12/31), which is currently being recorded and belongs to a predetermined channel (channel 021), from among the plural recorded programs that are recorded by the predetermined multi-simul-recording (e.g. recorded programs 011-1, 011-2, 021-1, 021-2, 031-1, 031-2 and 031-3) of one week (12/25 to 12/31)), on the basis of a forward skip instruction (hereafter referred to as "playback instruction"; e.g. a playback instruction which is input at 21:30 of 12/31) which is input via the remote controller 116 or the like. In this case, since the recorded program 021-2 is recorded from the beginning, playback is started from the beginning of the recorded program 021-2. If the recorded program 021-2 is recorded from an intermediate point, playback is started from the intermediate point (recording start position) of the recorded program 021-2. For example, the above-described "predetermined channel" is a channel which is an object of the predetermined multi-simul-recording and has a least channel number (service ID) . In the case of FIG. 4, the channel 021 and channel 031 are the objects of the predetermined multi-simul-recording, and the channel 021 having the smaller channel number corresponds to the predetermined channel.

Next, referring to FIG. 5, a fourth example of simple playback of multi-simul-recording is described. For example, it is assumed that the predetermined multi-simul-recording setting information includes the first recording information indicating that recording of channel 011 is performed from 19:00 to 22:00, the second recording information indicating that recording of channel 021 is performed from 19:00 to 22:00, and the third recording information indicating that recording of channel 031 is performed from 19:00 to 22:00. It is also assumed that the predetermined multi-simul-recording based the above-described predetermined multi-simul-recording setting information is being executed.

In the above case, if a playback stop instruction is input via the remote controller 116 or the like during the playback of the program 021-1, the controller 110 records in the nonvolatile memory 1103 a playback stop point (resume point) of the recorded program 021-1, on the basis of the input playback stop instruction, and stops the playback of the recorded program 021-1. In the meantime, if the playback stop instruction is input twice, the controller 110 deletes the playback stop point (resume point) which is recorded in the nonvolatile memory 1103.

As described above, if a playback stop instruction is input via the remote controller 116 or the like during the playback of the program 021-1, a transition occurs to the state prior to the playback of the recorded program 021-1. For example, a transition occurs to the viewing/listening state of channel 021. Specifically, the controller 110 executes control to output a signal for reproducing the program of the channel 021. Accordingly, the video and audio of the program of channel 021 are output from the video display 141 and speaker 142.

Thereafter, for example, if a viewing/listening instruction of channel 031 is input via the remote controller 116 or the like, the controller 110 executes control to output a signal for reproducing the program of channel 031, on the basis of the viewing/listening instruction of channel 031 which has been input via the remote controller 116 or the like. In this state, that is, in the state in which the video and audio of the program of channel 031 are being output, if a playback instruction is input via the remote controller 116 or the like, the controller 110 executes control to play back the recorded program 021-1 from the playback stop point, on the basis of the playback stop point (resume point) of the recorded program 021-1 which is stored in the nonvolatile memory 1103. Thereby, the program 021-1 is played back from the playback stop point.

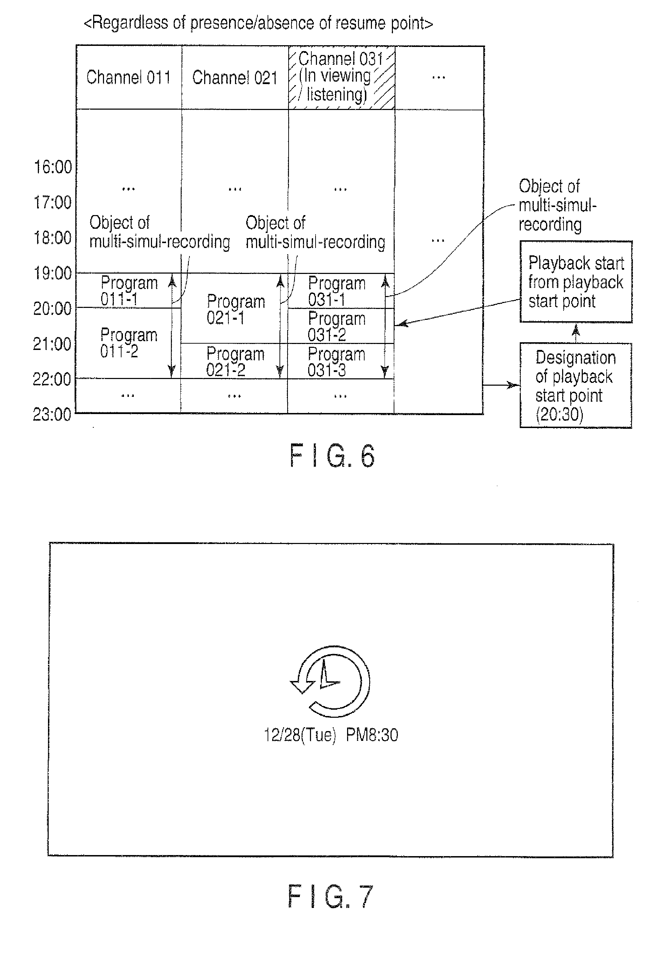

Next, referring to FIG. 6, a fifth example of simple playback of multi-simul-recording is described. As shown in FIG. 6, the digital television broadcast reception apparatus can also play back the recorded program from a designated playback start point. For example, if a playback start point (date/time of playback) is designated via the remote controller 116 or the like in the state in which the program of channel 031, which is currently broadcast, is being reproduced, the controller 110 plays back, from the playback start point, the recorded program which belongs to the channel (channel 031) that is currently being viewed. For example, if a playback start point (20:30 of 12/28) is designated via the remote controller 116 or the like, the controller 110 plays back, from the playback start point (20:30 of 12/28), the recorded program (recorded program 031-2) which belongs to the channel (channel 031) that is currently being viewed.

Besides, the controller 110 can also execute control to reproduce information indicative of the playback start point. For example, the digital television broadcast reception apparatus 1 displays a screen shown in FIG. 7 (a screen showing a playback start point), and then plays back, from the playback start point, the recorded program which belongs to the channel (channel 031) which is currently being viewed. As shown in FIG. 7, the screen showing the playback start point includes the information (12/28 (Tue) PM 8:30) indicating the playback start point and an icon indicating that a past program (recorded program) is to be played back.

As has been described above, the digital television broadcast reception apparatus 1 is adaptive to the simple operation and can select, from recorded programs, a recorded program which tends to become an object of playback, and can play back the selected recorded program.

For example, in the case where no playback stop point (resume point) is recorded and a predetermined channel is currently being reproduced, the digital television broadcast reception apparatus 1 can start playback from the beginning or recording start position of the program, which belongs to the predetermined channel and is currently being recorded, from among the plural recorded programs which have successively been recorded by the multi-simul-recording.

In the case where a playback stop point (resume point) in a predetermined recorded program is recorded, the digital television broadcast reception apparatus 1 can play back the predetermined recorded program from the playback stop point.

Besides, in the case where a playback start point is input in the state in which a predetermined channel is being viewed, the digital television broadcast reception apparatus 1 can play back, from the playback start point, the recorded program which belongs to the predetermined channel.

As has been described above, the digital television broadcast reception apparatus can change the playback start point, according to whether the playback stop point (resume point) is recorded or not. Thereby, the digital television broadcast reception apparatus can play back the recorded program, which is desired by the user, with a high probability. Moreover, the digital television broadcast reception apparatus can playback the program from the input playback start point, regardless of whether a playback stop point (resume point) is recorded or not. Thereby, the digital television broadcast reception apparatus can play back the recorded program from the date/time that is desired by the user.

## Claims

1. A broadcast reception apparatus **characterized by** comprising:
a recording controller (110) configured to control recording of programs corresponding to at least one channel signal in a recording time zone which is set; and
a playback controller (110) configured to control starting of playback from a beginning of a program which is being recorded or from a recording start position of the program which is being recorded, on the basis of an input timing of a playback instruction which is input while programs corresponding to a predetermined channel signal are being recorded by the control of the recording controller.

2. The apparatus of Claim 1, **characterized in that** the playback controller is configured to output, on the basis of an input viewing/listening instruction of a predetermined channel, viewing/listening program data corresponding to the predetermined channel signal of channel signals, and the playback controller is configured to control starting of playback from a beginning of a program which is being recorded and belongs to the predetermined channel or a recording start position of the program which is being recorded and belongs to the predetermined channel, on the basis of an input timing of the playback instruction which is input while the viewing/listening program data is being output and while programs corresponding to the channel signals are being recorded.

3. The apparatus of Claim 1, **characterized in that** the playback controller is configured to output, on the basis of an input viewing/listening instruction of a channel which is other than an object of recording, viewing/listening program data corresponding to a channel signal which is not included in the channel signals and is not the object of recording, and the playback controller is configured to control starting of playback from a beginning of a program which is being recorded and belongs to the predetermined channel of channels or a recording start position of the program which is being recorded and belongs to the predetermined channel, on the basis of an input timing of the playback instruction which is input while the viewing/listening program data is being output and while programs corresponding to the channel signals are being recorded.

4. The apparatus of Claim 1, **characterized in that** the playback controller is configured to store a playback stop point of a predetermined recorded program on the basis of a playback stop instruction which is input while the predetermined recorded program is being played back, and to stop the playback of the predetermined recorded program, and the playback controller is configured to control playback of the predetermined recorded program from the playback stop point on the basis of a playback instruction which is input.

5. The apparatus of Claim 1, **characterized in that** the playback controller is configured to output viewing/listening program data corresponding to the predetermined channel signal of channel signals on the basis of an input viewing/listening instruction of a predetermined channel, and the playback controller is configured to control playback of a predetermined recorded program belonging to the predetermined channel from a playback start point on the basis of the playback start point which is input while the viewing/listening program data is being output.

6. The apparatus of Claim 5, **characterized in that** the playback controller is configured to control output of data indicative of the input playback start point.

7. The apparatus of Claim 5, **characterized in that** the playback controller is configured to control playback of the predetermined recorded program belonging to the predetermined channel from the playback start point, after outputting data indicative of the input playback start point.

8. The apparatus of Claim 1, **characterized by** further comprising tuners (1031-1038) configured to select designated channel signals from broadcast signals,
wherein the recording controller is configured to control recording of the programs corresponding to the channel signals selected by the tuners in the recording time zone which is set for the tuners, and configured to delete a recorded program of the recorded programs, after a predetermined time period has passed since the recording of the recorded program.

9. A broadcast reception method **characterized by** comprising:
executing control to record programs corresponding to at least one channel signal in a recording time zone which is set; and
executing control to start playback from a beginning of a program which is being recorded or from a recording start position of the program which is being recorded, on the basis of an input timing of a playback instruction which is input while programs corresponding to a predetermined channel signal are being recorded.
